# FASCICULE DE BREVET EUROPEEN

(11) **EP 0 749 217 B1**
(45) Date de publication et mention de la délivrance du brevet: **13.10.1999**
(21) Numéro de dépôt: 96401240.5
(22) Date de dépôt: 10.06.1996
(51) Int. Cl.: H04B 7/185

(54) **Système de communication par satellites à défilement, satellite, station et terminal y inclus**
Kommunikationsanordnung mit niedrig fliegenden Satelliten, Satellit, Station und Endgerät dafür
Low orbital satellite communication system, satellite, station and terminal therefor

(30) Priorité: 12.06.1995 FR 9506930; 03.10.1995 FR 9511616
(43) Date de publication de la demande: 18.12.1996
(73) Titulaire: ALCATEL, 75008 Paris (FR)
(72) Inventeur: Sauvageot, Anne, 75006 Paris (FR); Rouffet, Denis, 92100 Boulogne Billancourt (FR); Casasoprana, Didier, 78100 St Germain en Laye (FR); Michel, Cyril, 75013 Paris (FR); Combarel, Laurent, 75017 Paris (FR)
(74) Mandataire: Lamoureux, Bernard

(56) Documents cités:
- EP-A- 0 464 765
- EP-A- 0 536 068
- EP-A- 0 600 699
- FR-A- 2 685 833
- FR-A- 2 690 010
- IEEE TRANSACTIONS ON AEROSPACE AND ELECTRONIC SYSTEMS, vol. 29, no. 3, Juillet 1993, NEW-YORK,US, pages 696-705, XP000398817 P.V.SUDAR ET AL.: "Global Communication Using a Constellation of Low Earth Meridian Orbits"
- IEEE JOURNAL ON SELECTED AREAS IN COMMUNICATIONS, vol. 13, no. 2, Février 1995, NEW-YORK,US, pages 291-300, XP000489293 F.VATALARO ET AL.: "Analysis of LEO,MEO, and GEO Global Mobile Satellite Systems in the Presence of Interference and Fading."

## Description

La présente invention concerne un système de communication comprenant un ensemble de satellites à défilement établissant des liaisons de communication entre des stations au sol et des terminaux fixes au sol, une liaison de communication issue d'une station aboutissant à des terminaux associés situés dans une zone géographique limitée incluant cette station.

Un système de ce type est décrit dans le document "GLOBALSTAR : un système transparent", par D. Rouffet, publié dans la Revue des Télécommunications, 1er trimestre 1993 et dans les documents cités dans sa bibliographie. EP 0 536 068 décrit ce système.

Dans le système décrit dans ce document, les terminaux ne sont pas fixes, mais mobiles. Ils possèdent une antenne omnidirectionnelle et communiquent avec le ou les satellites leur fournissant le signal le plus fort. Les satellites, quant à eux couvrent chacun une pluralité de surfaces élémentaires au sol, par une pluralité de faisceaux de fréquences porteuses différentes, qui se déplacent en même temps que le satellite. Vu du sol, le défilement des surfaces élémentaires nécessite pour les stations et les terminaux de nombreux basculements de faisceaux et de satellites qui entraînent une grande complexité du système de transmission. De plus, la liaison de communication entre une station et un satellite doit avoir une bande de fréquence très large, de sorte que la largeur de bande pouvant être transmise entre une station et un terminal associé est relativement limitée.

La présente invention concerne, à l'opposé, un système dans lequel le nombre de basculements de liaisons est considérablement réduit, et qui permet l'emploi de faisceaux plus directifs et plus nombreux, ce qui permet des laisons à large bande entre stations et terminaux.

Cet objectif, et d'autres encore, sont atteints par le système de l'invention qui se caractérise en ce que la liaison entre une telle station particulière et les terminaux qui lui sont associés est établie par un satellite appartenant audit ensemble de satellites, commandé pour établir à cet effet un faisceau orientable d'émission et un faisceau orientable de réception, pointant une ladite zone limitée incluant ladite station particulière, et supportant ladite liaison de communication.

L'emploi de faisceaux orientables maintenus fixes par rapport au sol permet qu'un même satellite établisse et maintienne une liaison de communication entre une station et ses terminaux, alors qu'il se déplace d'un horizon à l'autre de ceux-ci, c'est-à-dire aussi longtemps que possible, compte tenu du défilement des satellites, ce qui contribue à réduire le nombre de basculements de liaison et donc à améliorer l'efficacité globale de la transmission.

Dans une forme de mise en oeuvre de l'invention, lesdits faisceaux sont établis sur commande de ladite station particulière, transmise audit satellite. Chaque station demande ainsi aux satellites visibles les faisceaux dont elle a besoin, tant en fréquence, largeur de bande qu'en forme et en orientation.

Selon une alternative, lesdits faisceaux sont établis à partir de données préalablement enregistrées dans ledit satellite et utilisées au fur et à mesure de la progression du satellite.

Selon une autre alternative, lesdits faisceaux sont établis à partir de données préalablement enregistrées dans la station et fournies au satellite au fur et à mesure de sa progression.

Dans le cas de la première forme de mise en oeuvre mentionnée, un satellite étant en vue de ladite station particulière, celle-ci est agencée pour lui commander une mise en liaison, ce qui consiste à lui transmettre des données qui l'identifient elle-même et des données de commande d'établissement de faisceaux, le satellite étant agencé pour vérifier l'appartenance de la station au système et pour établir en conséquence les faisceaux qu'elle demande.

De même, un satellite étant en vue de ladite station particulière, celle-ci est agencée pour lui commander une suppression de liaison, ce qui consiste à lui transmettre des données qui l'identifient elle-même et des données de commande de suppression de faisceaux, le satellite étant agencé pour vérifier l'appartenance de la station au système et pour supprimer en conséquence les faisceaux établis à son profit.

Par ailleurs, dans le système de l'invention chaque station comprend deux antennes directives au moins, dont une pointe vers le satellite par lequel est établie à son profit une liaison de communication.

De même, chaque terminal comprend une antenne directive au moins, laquelle est pointée vers le satellite par lequel est établie une liaison de communication qui la vise.

En outre, de façon spécialement avantageuse, ledit satellite est commandé pour établir lesdits faisceaux seulement hors d'une zone céleste où le système serait susceptible de perturber d'autres communications spatiales.

Alors, de préférence, ledit satellite transmet sur une fréquence au moins allouée auxdites autres communications spatiales.

Cela permet d'installer le système de communication de l'invention sans nécessiter d'autre allocation de fréquence que l'attribution des fréquences des systèmes à satellites géostationnaires là où ceux-ci ne les utilisent pas.

Plus précisément, des moyens de prévention de brouillage préjudiciable sont inclus dans le système de communication de l'invention, contenant des données de brouillage définissant ou permettant de définir, pour chaque satellite et en ce qui concerne chaque station, au moins un intervalle de temps où l'établissement d'une liaison de communication est permis, ou, réciproquement, au moins un intervalle de temps où l'établissement d'une liaison de communication est interdit, ces moyens de prévention de brouillage comprenant des moyens de contrôle intervenant dans les décisions d'établissement et/ou de suppression de faisceaux entre le satellite et la station considérés en interdisant l'établissement ou le maintien d'une liaison de communication susceptible de perturber d'autres communications spatiales.

Selon une forme d'application de ce qui précède, lesdites données de brouillage sont incluses dans une table, incorporée dans chaque station, qui est consultée par lesdits moyens de contrôle, lors du pointage de son antenne, afin d'empêcher, le cas échéant, le pointage dans une direction telle que le système soit susceptible de perturber d'autres communications spatiales.

Selon une autre forme d'application de ce qui précède, lesdites données de brouillage sont incluses dans une table, incorporée dans chaque satellite, qui est consultée, lors du pointage de faisceaux, afin d'empêcher leur pointage dans une direction telle que le système soit susceptible de perturber d'autres communications spatiales.

Additionnées l'une à l'autre, les dispositions que l'on vient de mentionner sont redondantes ; elles permettent d'augmenter la sécurité du système et gérantissent que le système de l'invention ne perturbera pas les système de communication à satellites géostationnaires.

De préférence, dans l'un ou l'autre des deux cas précédent, ladite table est téléchargée à partir d'un centre de commande, lequel fournit également lesdites données de pointage aux stations et/ou aux satellites.

Enfin, les satellites peuvent être sur une orbite telle que leur trace au sol se referme après un nombre défini de révolutions. Cela simplifie les éphémérides dans les stations et les terminaux.

L'invention a en outre pour objet une station, un terminal et un satellite respectivement arrangés pour être conformes au système de communication que l'on vient de définir

Les différents objets et caractéristiques de l'invention seront maintenant détaillés dans la description qui va suivre d'un exemple de mise en oeuvre de l'invention, fourni à titre non limitatif, en se référant aux figures annexées qui représentent :
- la figure 1, une vue schématique d'un système de communication conforme à l'invention,
- la figure 2, une trajectoire possible, projetée à la surface de la Terre, de satellites convenant à la mise en oeuvre de l'invention,
- la figure 3, un plan mettant en évidence la réutilisation des fréquences dans le système de la figure 1,
- la figure 4, un plan schématique d'une forme de réalisation des équipements d'un satellite du système de la figure 1,
- la figure 5, un plan schématique des équipements d'une station ou d'un terminal du système de la figure 1,
- la figure 6, un plan schématique d'une forme de réalisation des équipements d'un satellite du système de la figure 1 dans laquelle sont ajoutés des moyens permettant une réutilisation des fréquences des systèmes de communication géostationnaires,
- la figure 7, un plan schématique des équipements d'une station ou d'un terminal du système de la figure 1 dans lequel sont ajoutés des moyens permettant une réutilisation des fréquences des systèmes de communication géostationnaires
- la figure 8, un exemple du contenu des tables de données 52 et 82 des figures 6 et 7.

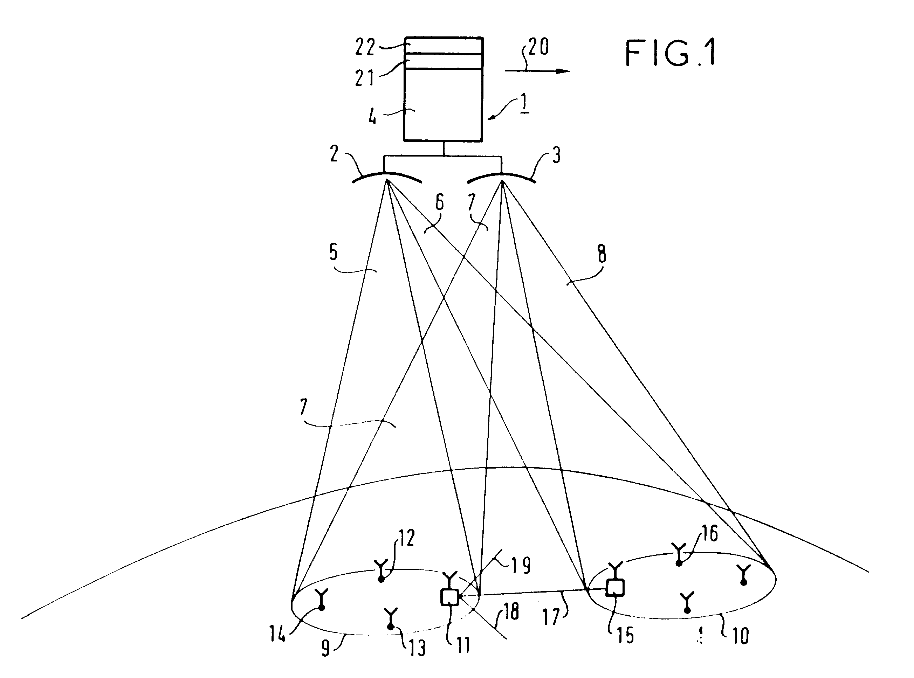

Le système de communication par satellites de l'invention est illustré, de façon très schématique par la figure 1. Il comprend un ensemble de satellites à défilement, dont un seul est représenté en 1 sur la figure. Il comprend une antenne de réception 2 et une antenne d'émission 3, entre lesquelles se place un répéteur 4. Les signaux effectivement reçus de la Terre par l'antenne de réception 2 sont amplifiés dans le répéteur 4 et retransmis vers la Terre par l'antenne d'émission 3. Ainsi, du point de vue gestion de la communication, le satellite 1 est transparent. Il ne constitue qu'un relais de transmission entre des sources et des destinataires de signaux les uns et les autres au sol. Cela réduit le coût du segment spatial.

Plus précisément, les antennes 2 et 3 engendrent chacune une multiplicité de faisceaux. L'antenne 2 engendre par exemple des faisceaux montants dont notamment les faisceaux 5 et 6. De même, l'antenne 3 engendre des faisceaux descendants, dont les faisceaux 7 et 8. Ces faisceaux peuvent avoir des caractéristiques différentes (fréquence, polarisation, largeur de bande, etc.) Comme il est bien connu, on peut utiliser pour cela des antennes réseaux. On en trouvera par exemple une description dans l'article " A Ku Band Antenna Program" de D. Michel et al, publié dans les minutes de la "15th International Communications Satellite Systems Conference", organisée par L'AIAA, du 27 février au 3 Mars, 1994 ou dans l'article "Antenne active de télémesure, charge utile pour satellite d'observation en orbite basse", de F. Magnin et al, GINA 94. Un faisceau montant, 5 par exemple, et un faisceau descendant, 7 par exemple, couvrent une même zone géographiquement limitée, 9, à la surface de la Terre. De même, les faisceaux 6 et 8 couvrent une autre zone 10.

Dans une zone telle que 9, on trouve une station 11 et des terminaux 12, 13, 14. Le principe est que la station 11 communique avec les terminaux 12, 13, 14 par l'intermédiaire d'un satellite, 1, dont des faisceaux émission et réception sont orientés sur une zone, 9, qui contient la station et les terminaux associés. Les signaux envoyés par la station sont relayés vers les terminaux par le satellite. De même, les signaux envoyés par les terminaux sont relayés par le satellite vers la station. Cela établit entre eux une liaison de communication. Il en va de même en ce qui concerne la zone 10 dans laquelle se trouvent une station 15 et des terminaux 16 qui communiquent entre eux comme on vient de l'indiquer.

A titre d'exemple, l'exploitation de la liaison de communication entre une telle station et les terminaux associés peut être du type appliqué dans les systèmes de radiotéléphonie terrestres ; la liaison de communication offre alors plusieurs canaux étagés en fréquence, certains de ces canaux au moins supportant plusieurs voies par multiplexage temporel. Les terminaux appellent la station sur un canal d'accès qui leur est commun et la station répond sur un canal de commande. Une procédure classique, de type "ALOHA" ou "slotted-ALOHA", permet de régler les conflits d'accès au canal d'accès. Le canal de commande permet d'affecter une voie temporelle entre un terminal et la station, dans chaque sens de transmission. A partir de ce moment la communication peut avoir lieu, par exemple entre le terminal 14 et la station 11. Celle-ci peut elle-même connecter ce terminal 14 à un autre terminal, 12 par exemple, par des moyens similaires. Elle peut aussi, par des liaisons 17, 18, 19, prolonger la communication vers d'autres stations, notamment la station 15, ou vers d'autres réseaux, selon le lieu de raccordement d'un autre terminal auquel demande à accéder le terminal 14.

Les liaisons entre stations peuvent être des liaisons terrestres. Ces liaisons peuvent également être des liaisons par satellite. Les mêmes satellites peuvent être employés à cette fin. Ils contiennent alors un système de communication additionnel, semblable à celui de l'invention, réservé aux communications entre stations et dimensionné en conséquence. Les zones au sol, en particulier seront assez grandes pour comprendre plusieurs stations.

La liaison de communication entre la station 11 et les terminaux associés 12, 13, 14, le satellite étant transparent est donc une liaison multiplexée de la station vers tous les terminaux. Elle peut comprendre un ou plusieurs canaux séparés en fréquence et sur chacun d'eux une ou plusieurs voies à multiplexage temporel, par exemple à multiplexage temporel asynchrone. Il suffit, dans le cadre de la présente invention d'indiquer qu'elle emploie des techniques bien connues et éprouvées dans le domaine des communications terrestres.

Dans le système de l'invention, le satellite 1 est un satellite à défilement qui se déplace selon la flèche 20. Cela signifie que les faisceaux 5 à 8, pour viser constamment les zones 9 et 10 doivent être pointés vers ces zones et les suivre. Le satellite 1 comprend à cette fin un dispositif de pointage de faisceaux 21, comprenant une table lue périodiquement et qui fournit les coordonnées de pointage des faisceaux au fur et à mesure du déplacement du satellite, afin que les faisceaux demeurent pointés sur les zones 9 et 10, tant que le satellite 1 est en vue de celles-ci. Des antennes réseaux du type mentionné précédemment permettent de faire face à ce besoin.

Par ailleurs, le satellite 1 se déplaçant cessera finalement d'être en visibilité de la zone 9 par exemple. Avant cela, les faisceaux 5 et 7 devront être éteints. Un autre satellite, semblable au satellite 1 sera utilisé, à la place du satellite 1, pour, à l'aide de faisceaux semblables aux faisceaux 5 et 7, maintenir la liaison de communication entre la station 11 et les terminaux 12, 13, 14. Cela se produira tout comme lorsque le satellite 1 est arrivé antérieurement en vue des zone 10 et 9.

Pour ce faire, conformément à l'invention, le satellite comprend des moyens d'établissement de faisceaux 22, qui causent l'établissement de faisceaux propres à établir les liaisons de communication nécessaires pour les zones que le satellite rencontre sur sa route.

La route du satellite étant connue des stations, chacune d'elle, selon une première forme de mise en oeuvre de l'invention, demande au satellite 1, lorsqu'il se lève à son horizon, d'établir les faisceaux qui lui sont nécessaires. C'est ainsi que la station 11, voyant s'élever le satellite 1 à l'horizon, lui adresse un message, sur un canal de commande non représenté sur la figure 1, adressé aux moyens d'établissement de faisceaux 22, pour que le satellite établisse les faisceaux 5 et 7. Bien entendu, les stations telles que 11, en rapport entre elles par les liaisons telles que 17, 18, 19, coordonnent au préalable leurs demandes de mise en liaison en tenant compte de la capacité de communication du satellite, afin que les demandes des différentes stations puissent toujours être satisfaites.

Additionnellement, la station 11 est agencée pour commander une mise en liaison au satellite 1 en lui transmettant des données qui, d'une part, l'identifient elle-même et, d'autre part, spécifient les faisceaux à établir ; de son côté, le satellite est agencé pour vérifier l'appartenance de la station au système de communication et pour établir en conséquence les faisceaux qu'elle demande. Il s'agit là de protéger l'accès au satellite contre toute intrusion frauduleuse.

Selon une variante, les faisceaux sont établis à partir de données préalablement enregistrées dans le satellite et utilisées au fur et à mesure de la progression du satellite autour de la Terre.

Selon une autre variante, les données sont stockées dans les stations et fournies au satellite au fur et à mesure de sa progression.

Il reste à considérer que le système de communication de l'invention comprend un ensemble de satellites capables de fournir en permanence les liaisons de communication requises par chacune des stations pour communiquer avec les terminaux associés de sa zone et que, corrélativement, chacune des stations, pour être en mesure de fournir un service permanent doit voir toujours un satellite au moins, apte à lui fournir une liaison de communication avec les terminaux qui lui sont associés, mais voir aussi un deuxième satellite s'élevant au-dessus de l'horizon alors que celui qui la met en liaison avec ses terminaux n'est pas encore trop éloigné.

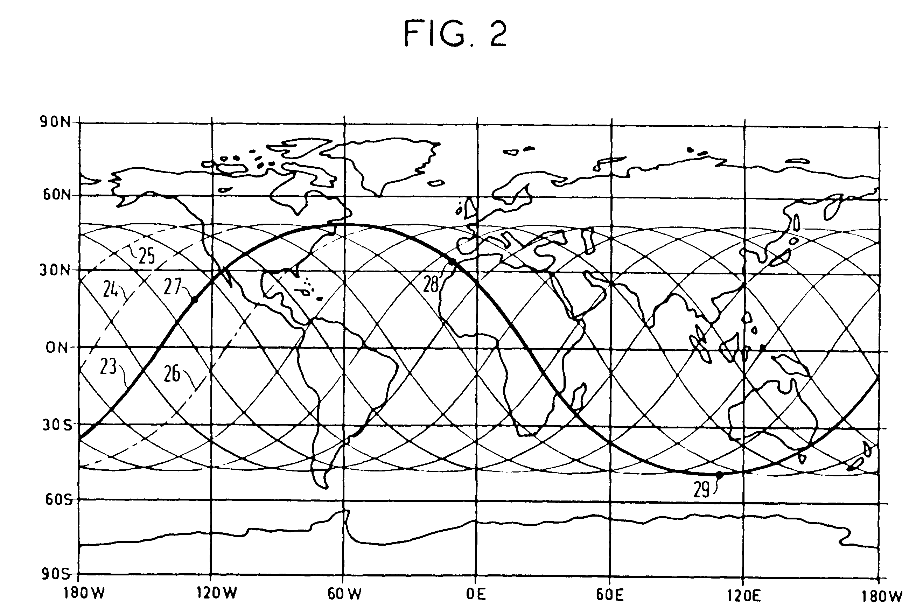

Selon un mode de réalisation, ces satellites circulent sur des orbites circulaires à 1626,5 km d'altitude, inclinées à 55°. La figure 2 représente la trace au sol d'une telle orbite. Compte tenu de la rotation de la Terre et de la précession naturelle due à l'aplatissement de la Terre, cette trace se referme sur elle-même après 12 révolutions. Cela simplifie le pointage des antennes, ce qui est particulièrement important en ce qui concerne les antennes des terminaux. Sur la figure 2, on a repéré les parcours 23, 24, 25..., 26, après lesquels un satellite se retrouve à son point de départ. Dans un exemple de réalisation du système de satellites, on peut prévoir plusieurs orbites, régulièrement espacées entre elles, dont la trace est semblable à celle de la figure 2. La phase des satellites sur chaque orbite est calée par rapport à celles qui l'encadrent, afin que la distribution des satellites soit régulière et que, vus d'une station au sol, les satellites suivent toujours la même trajectoire.

Chaque satellite établit un nombre maximal n de faisceaux montants et un même nombre maximal n de faisceaux descendants. Chaque faisceau couvre au sol une surface d'environ 200 km de rayon. La mise en place peut être incrémentale. Une première configuration permet d'avoir une couverture complète aux latitudes tempérées. Une seconde permet de couvrir la planète entre 80°S et 80°N. Dans des régions où la population est peu dense, des faisceaux de plus grandes ouverture pourront être adoptés, couvrant par exemple des zones de 500 km de diamètre.

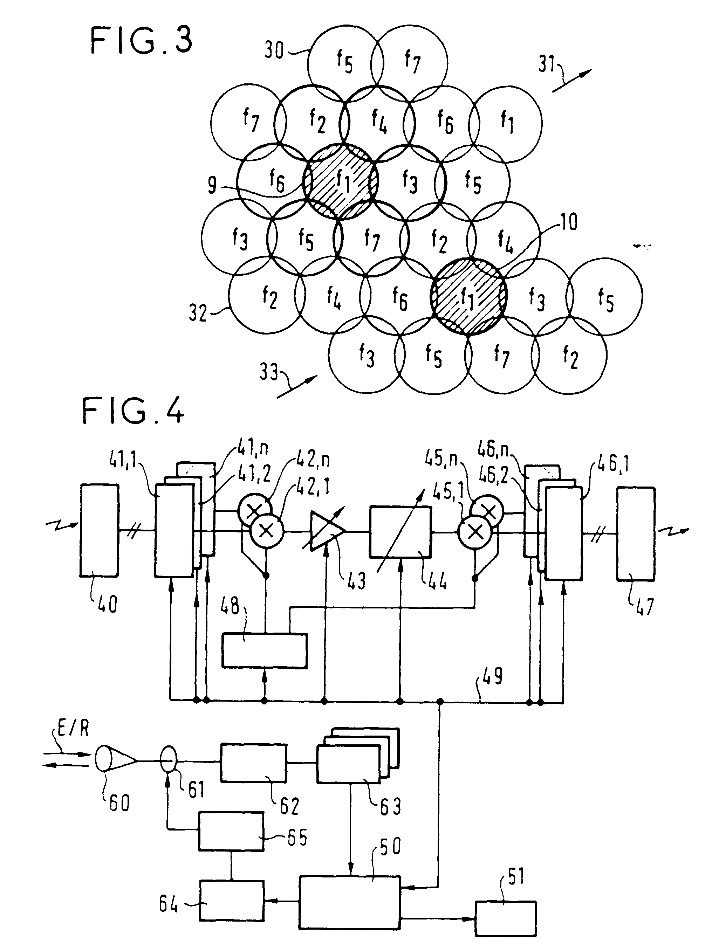

En ne considérant qu'une direction de transmission, du satellite vers le sol par exemple, chaque zone se voit affecter en propre une fréquence de réception. Les fréquences de réception des zones voisines sont différentes. Toutefois, le nombre total de fréquences employées par le système peut être modéré. A titre d'exemple, la figure 3 représente, selon un modèle bien connu, des zones 30 formant un pavage régulier recouvrant toute une région. Les fréquences propres à chacune de ces zones sont indiquées. Elles sont au nombre de 7, f1 à f7. Les zones 9 et 10 de la figure 1 sont reportées sur la figure 3. On voit qu'elles ont, dans cet exemple, la même fréquence fl. Le même arrangement est utilisé dans le sens montant.

Un autre mode de réalisation affecterait à chacune des zones un temps d'émission/réception dans une trame temporelle en comprenant 7 par exemple, t1 à t7, pendant lequel toute la bande de fréquence disponible peut être utilisée, en application de la technique du saut de pinceau.

Vus d'une station au sol, les satellites défilent dans le ciel selon des trajectoires qui se répètent. On peut donc utiliser des tables d'éphémérides simplifiées pour décrire ces trajectoires, ce qui facilite les calculs dans chaque station et dans chaque terminal.

En effet, comme on le verra par la suite, la liaison de communication établie pour une station par un satellite comprend non seulement un faisceau pointé par le satellite sur la zone contenant la station, comme illustré à la figure 1, mais aussi un faisceau pointé de la station vers le satellite, pour la transmission montante et la transmission descendante de la liaison de communication. La station emploiera de préférence des antennes à grand gain. Et chaque station comprendra deux antennes au moins, afin que l'une serve à la liaison de communication active et l'autre à préparer l'établissement de la liaison de communication par un autre satellite. Les terminaux quant à eux pourront avoir une ou plusieurs antennes de faibles dimensions, donc de faible directivité, ce qui facilitera leur pointage vers les satellites.

On se tournera maintenant vers la figure 4 qui représente schématiquement une forme de réalisation des équipements d'un satellite du système de communication de l'invention, par exemple du satellite 1 de la figure 1.

Essentiellement, pour la communication entre les stations et les terminaux, le satellite comprend un système de répéteur incluant:
- une antenne réception 40,
- une pluralité de réseaux de formation de faisceaux de réception 41,1, 41,2, jusqu'à 41,n,
- une pluralité de mélangeurs de réception 42,1, à 42,n,
- pour chaque voie ainsi déplacée en fréquence, un amplificateur à gain variable 43, suivi d'un filtre à largeur de bande ajustable 44,
- une pluralité de mélangeurs d'émission 45,1 à 45,n,
- une pluralité de réseaux de formation de faisceaux d'émission 46,1, 46,2, jusqu'à 46,n,
- une antenne d'émission 47,
- un oscillateur local fournissant aux mélangeurs d'émission d'une part et aux mélangeurs de réception d'autre part des ondes locales de changement de fréquence permettant de transférer les voies de communication de la bande de fréquences montante vers une fréquence intermédiaire plus faible, afin de permettre, dans de bonnes conditions, l'amplification et le filtrage et de replacer les liaisons de communication dans la bande de fréquences descendantes.

Un bus 49 connecte les réseaux de formation de faisceaux, les mélangeurs, les amplificateurs et les filtres à un processeur 50 qui fournit à tous ces éléments les grandeurs de réglage dont ils ont besoin.

L'antenne 40 est une antenne réseau du type décrit dans les documents cités précédemment ; conjointement avec les réseaux de formation de faisceau 41,1 à 41,n, elle produit n faisceaux. Sa largeur de bande englobe les 7 bandes de fréquences utilisées pour couvrir les différentes zones (ou toute la bande en cas de saut de pinceau).

Le signal existant dans le faisceau formé par le réseau 41,1, provenant de la station et des terminaux d'une zone donnée vers laquelle est pointé ce faisceau, est transféré dans la bande de fréquences intermédiaire par le mélangeur 42,1, l'oscillateur local 48 fournissant la fréquence locale appropriée. Après amplification, dans l'amplificateur 43, selon le gain prescrit à l'amplificateur par le processeur 50 le filtre 44 sélectionne la bande de fréquences utile à cette zone. Le signal résultant est déplacé en fréquence, dans le mélangeur 45,1, selon l'onde locale fournie par l'oscillateur local 48, pour prendre sa place dans la bande de fréquences descendantes. Le signal ainsi préparé est fourni au réseau de formation de faisceau 46,1 et l'énergie correspondante est dirigée par l'antenne 47 vers la même zone considérée. Ces moyens définissent une liaison de communication relative à cette zone.

Il est clair ainsi que les deux réseaux de formation de faisceau 41,1 et 46,1, d'une même liaison de communication, produisent des faisceaux ayant la même orientation. Ils reçoivent du processeur 50 la même information de pointage. Le processeur 50 extrait cette information d'une base de données 51 ayant un emplacement par zone au sol et contenant des données qui permettent de localiser cette zone par rapport au satellite, au cours du temps, et donc de définir l'orientation à donner aux faisceaux d'antenne du satellite, pour qu'ils l'atteignent. Cette information est transmise aux réseaux 41,1 et 46,1 qui l'utilisent pour orienter les faisceaux. Le processeur est agencé pour adresser périodiquement la base de données ; à chaque fois, une nouvelle information de pointage est adressée aux réseaux 41,1 et 46,1 qui modifient en conséquence le pointage des faisceaux. La périodicité de cet adressage n'a pas besoin d'être très élevée.

Il est rappelé que, en variante, cette information peut être directement fournie au satellite par la station au sol lorsque le satellite en a besoin.

Bien entendu, ce que l'on vient d'exposer au sujet d'une liaison de communication est également valable pour chacune des liaisons de communication que peut établir simultanément le satellite. Le processeur fournit aux éléments correspondant du répéteur les informations de pointage et autres attributs dans les mêmes conditions, par partage de temps.

Bien entendu encore, le satellite n'établit que les liaisons de communication nécessaires et chacune avec le niveau de puissance et la largeur de bande exigée. Cela signifie entre autres qu'il supprime toute liaison de communication qui n'est plus nécessaire, soit que la zone pour laquelle cette liaison a été établie ne soit plus en vue, soit qu'elle soit servie par un autre satellite.

Selon l'invention, le satellite est donc commandé pour établir des liaisons de communication et cette commande consiste à lui transmettre des données servant à établir et à mettre à jour la base de données 51.

A cette fin, le satellite comprend, en cascade :
- une antenne de commande 60,
- un coupleur 61,
- un ensemble d'amplification et de filtrage en réception 62,
- un démodulateur 63, et,
en cascade également :
- un modulateur 64 et
- un ensemble d'amplification et de filtrage en émission 65 attaquant le coupleur 61.

Une source de données de commande en vue du satellite peut ainsi lui transmettre des données de commande sur une fréquence de commande que le satellite reçoit, amplifie et démodule, la sortie du démodulateur 63 fournissant les données en question au processeur 50 qui les compare avec la base de données 51.

La source de données de commande doit dialoguer avec le satellite et, en particulier s'identifier. Comme plusieurs stations sont susceptibles de vouloir dialoguer en même temps avec le satellite, une procédure d'accès permettant de régler les conflits doit être appliquée. Une procédure du type ALOHA semblable à celle que l'on a évoqué précédemment peut être ici également appliquée.

Dans une première forme du système de communication de l'invention, ces données stockées dans la base de données 51 proviennent d'une station pilote unique ; elles sont mises à jour régulièrement. Ces données servent à l'établissement et à la suppression des liaisons de communication et fournissent en conséquence les informations de pointage des faisceaux. Les stations constatent l'établissement, puis la suppression des liaisons de communication par le satellite qui les survole. Elles utilisent les liaisons de communication établies par les divers satellites, en basculant de l'une à l'autre au moment approprié. Dans chaque station, les données qui permettent de suivre le satellite et de basculer la liaison de communication d'un satellite à un autre sont également fournies par une station pilote du système de communication.

Selon une autre forme du système de communication de l'invention, les données intéressant chaque liaison de communication sont transmises au satellite par la station demandant une telle liaison au moment où cette station voit approcher le satellite. En réponse, le satellite établit la liaison de communication demandée. Les mêmes moyens seront utilisés pour permettre à une station de commander la suppression d'une liaison de communication. Le rôle du satellite vis-à-vis des données de la base de données 51 est alors bien plus passif que dans le premier cas, puisqu'il a simplement à exécuter des ordres d'établissement et de suppression de liaisons de communication, la base de données 51 fournissant seulement les données permettant l'authentification et les informations de pointage.

Selon une autre forme encore, les données intéressant chaque liaison de communication sont transmises au satellite par la station ayant demandé une telle liaison à chaque fois que le satellite en a besoin. Pratiquement alors, la base de données 51 ne joue plus aucun rôle, à part celui de l'authentification , son contenu se trouvant dans les bases de données des stations, comme on va le voir.

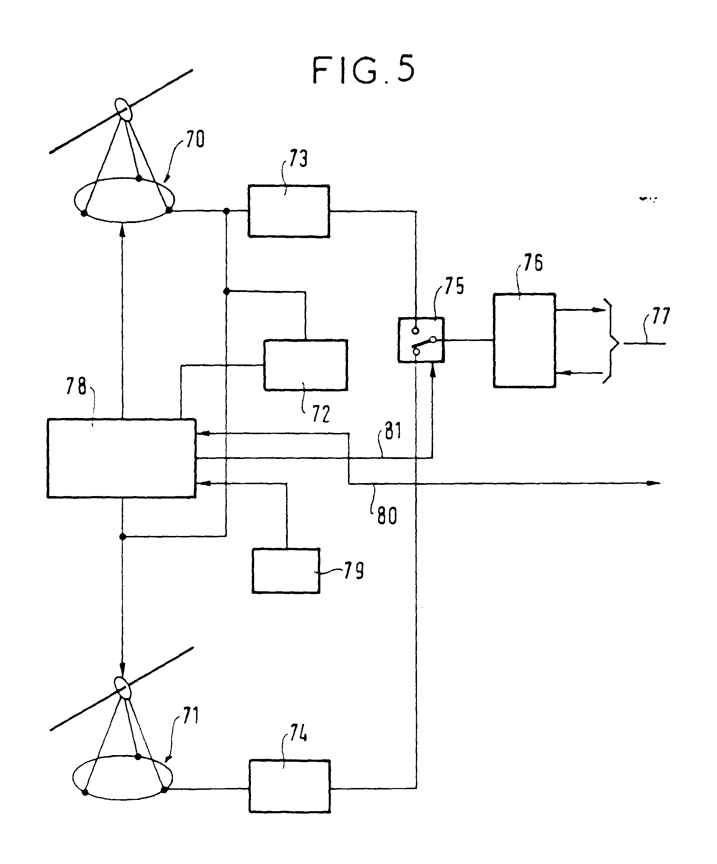

On se tournera maintenant vers la figure 5 qui représente, très schématiquement une forme de réalisation de l'équipement de transmission d'une station au sol. Il s'agit dans ce cas d'une station à deux antennes.

La station de la figure 5 comprend donc deux antennes 70 et 71, couplées chacune à une chaîne d'émission/réception 73, 74 couplées, l'une ou l'autre, par un commutateur inverseur 75, à un ensemble de modulation/démodulation 76 menant à une interface utilisateur 77. Les deux antennes sont orientées par un processeur de commande 78 disposant pour cela d'une base de données 79, à l'instar de ce qui a été décrit pour le satellite en se référant à la figure 4.

Additionnellement, une voie de transmission de données 80 permet au processeur 78 de communiquer dans les deux sens avec une station pilote, par exemple, susceptible de lui fournir des données devant être enregistrées dans la base de données 79. Comme indiqué précédemment, cette voie de transmission de données peut être établie par l'intermédiaire des satellites du système de communication, dotés de moyens additionnels à cet effet.

Le processeur 78 et la base de données 79, comme on l'a vu pour le processeur 50 et à la base de données 51 de la figure 4, orientent les faisceaux des antennes 70 et 71 vers un premier et un deuxième satellite. L'un des deux satellites établit une liaison de communication pour le compte de la station considérée, celui que vise l'antenne 71 par exemple, et le commutateur 75 est orienté en conséquence, comme indiqué sur la figure 5, sous la commande du processeur 78, par une voie de commande 81.

De cette façon, la station 11, par exemple, à travers cette interface utilisateur 77 communique avec le satellite et, à travers celui-ci, puisqu'il est transparent du point de vue communication, avec les terminaux de sa zone.

Lorsque le premier satellite s'éloigne, le commutateur inverseur 75 est basculé vers l'antenne 70 qui pointe vers un deuxième satellite qui sera utilisé pour établir la liaison de communication à la place du premier.

Additionnellement, la station dispose d'un équipement de voie de commande 72, couplés à l'antenne 70 ou 71 orientée par le processeur 78, pour la transmission de données vers le satellite. Cette voie de commande permet à la station de transmettre des données de commande au satellite, comme décrit précédemment.

Des données de commande, parvenant à la station par la liaison 80 sont d'abord enregistrées par le processeur 78 dans la base de données 79 qui contient donc, non seulement les données de commande dont elle a besoin pour acquérir et poursuivre les satellites du système de communication, mais aussi celles qui doivent être transmises aux satellites.

La station de la figure 5 peut ainsi jouer le rôle de station pilote et transmettre vers chacun des satellites du système, un ensemble complet de données de commande.

Alternativement, chacune des stations semblables à celle de la figure 5 peut se borner à transmettre à chaque satellite avec lequel elle entre en relation les données qui lui permettront d'établir à son profit une liaison de communication.

Dans ce cas, la station doit également transmettre, plus tard, une commande de suppression de liaison.

Alternativement encore, la liaison de commande permet de fournir au satellite les données de commande dont il a besoin, à partir de la base de données 79, lorsqu'il en a besoin, au cours de sa progression.

On n'a pas prévu de figure pour illustrer les terminaux. La figure 5, en effet s'applique également au cas d'un terminal.

Celui-ci possède une ou deux antennes orientables et une ou deux chaînes de réception, ainsi qu'une chaîne émission. L'interface utilisateur délivre le spectre entier de la liaison de communication. La voie de communication effectivement utilisée par le terminal dans sa relation avec la station est déterminée par la procédure de communication qui a été évoquée plus haut et qui, en tout cas, sort du cadre de la présente invention.

De même, le terminal possède un processeur et une base de données pour pointer sa ou ses antennes dans les conditions qui ont été spécifiées précédemment. Les données inscrites dans sa base de données lui sont transmises par la station à laquelle il est associée, par la liaison de commande 82, ou par tout autre équivalent de celle-ci.

Bien entendu, le système que l'on vient de décrire peut aisément être étendu de sorte qu'une station utilise plusieurs satellites en même temps pour communiquer avec les terminaux qui lui sont associés. Les stations (voir figure 5) devront avoir plus de deux chaînes d'émission-réception, telles que 70, 73, et le commutateur 75 sera plus complexe, pour connecter sélectivement, par exemple, deux chaînes actives sur trois à deux ensembles de modulation-démodulation tels que 76.

Dans le sens opposé, le système que l'on vient de décrire s'applique tout aussi bien aux cas où les stations et/ou les terminaux ne possèdent qu'une antenne, à pointage électronique par exemple, ce qui leur permet, de passer d'un satellite à un autre, sans conséquences pratiques sur les communications.

Il reste à considérer finalement une particularité du système de communication de l'invention qui est que, vu du sol les satellites apparaissent comme des sources qui sont allumées et éteintes selon les besoins de communication de chaque station. Mais, il faut aussi prendre en compte d'autres sources qui sont les satellites d'autres systèmes de communication actuels ou futurs. Or, le système de l'invention permet d'éteindre les faisceaux d'un satellite dont la position dans le ciel serait susceptible d'entraîner la perturbation d'autres communications spatiales. Alors, il devient possible d'utiliser pour le système de communication de l'invention une fréquence allouée auxdites autres communications spatiales, voire seulement de telles fréquences. Le système de l'invention ne demande ainsi aucune attribution spécifique de fréquences.

On donnera un exemple de ce qui précède en se référant particulièrement au cas des communications par satellites géostationnaires qui utilisent des fréquences des bandes Ka ou Ku. Les communications entre un satellite géostationnaire et une station de communication géostationnaire au sol, dans chaque sens, sont directives, même si la directivité est faible, comme dans le cas de la réception directe de programmes de télévision. Les antennes des stations de communication géostationnaire sont pointées vers les satellites en orbite synchrone ; les antennes des stations d'une zone donnée sont donc toutes pointées vers un arc traversant le ciel. On définit ainsi une zone de non-fonctionnement du système de l'invention autour de l'arc géostationnaire, qui est calculée en fonction de la directivité des antennes, des puissances mises en jeu et du seuil de coordination à ne pas dépasser (par exemple +/- 10° autour de larce géostationnaire). Toute source émettant sur les fréquences des satellites géostationnaires et se trouvant dans cette ceinture pourrait être reçue par une ou plusieurs stations qui s'en trouveraient perturbées. Mais, a contrario, toute source se trouvant en dehors de cette ceinture et émettant sur ces fréquences ne perturberait pas les stations du système de communication géostationnaire. Il est donc possible de constituer un système de communication employant ces fréquences à la condition qu'il soit spatialement séparé des systèmes de communication géostationnaire. C'est ce que permet d'exploiter l'invention et prévoyant des dispositions additionnelles telles que tout satellite du système de l'invention ne puisse pas établir de faisceau vers une cellule au sol lorsque, vu de cette cellule, il se trouve dans ladite ceinture. Dans l'autre sens de communication, du sol vers les satellites géostationnaires, l'invention prévoit d'interdire aux stations d'émettre en direction des satellites géostationnaires. Ipso facto, les terminaux n'émettront pas non plus dans cette direction.

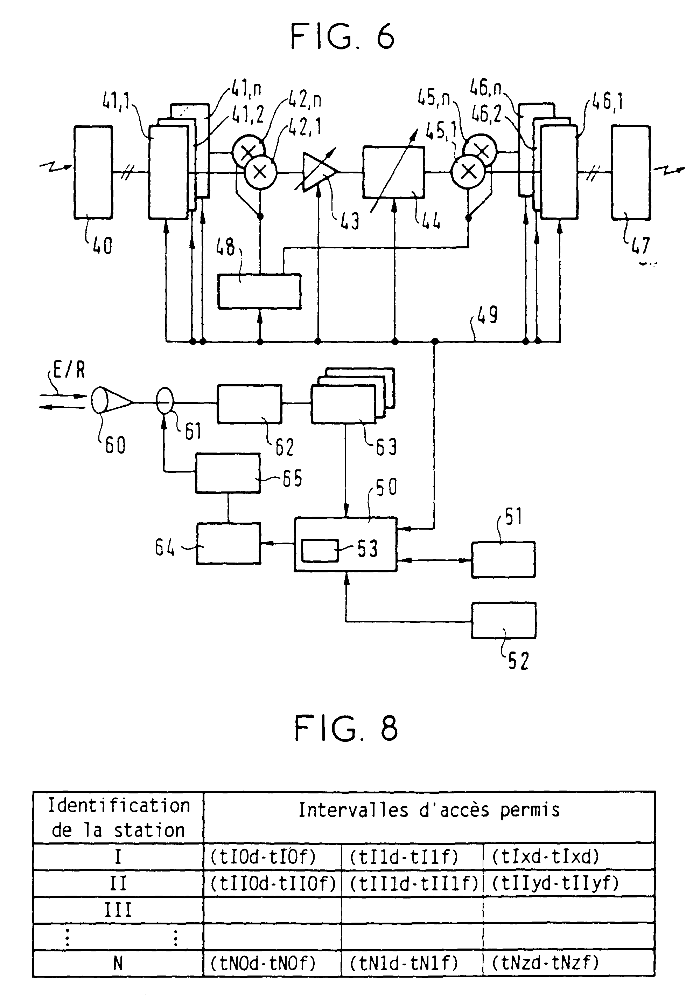

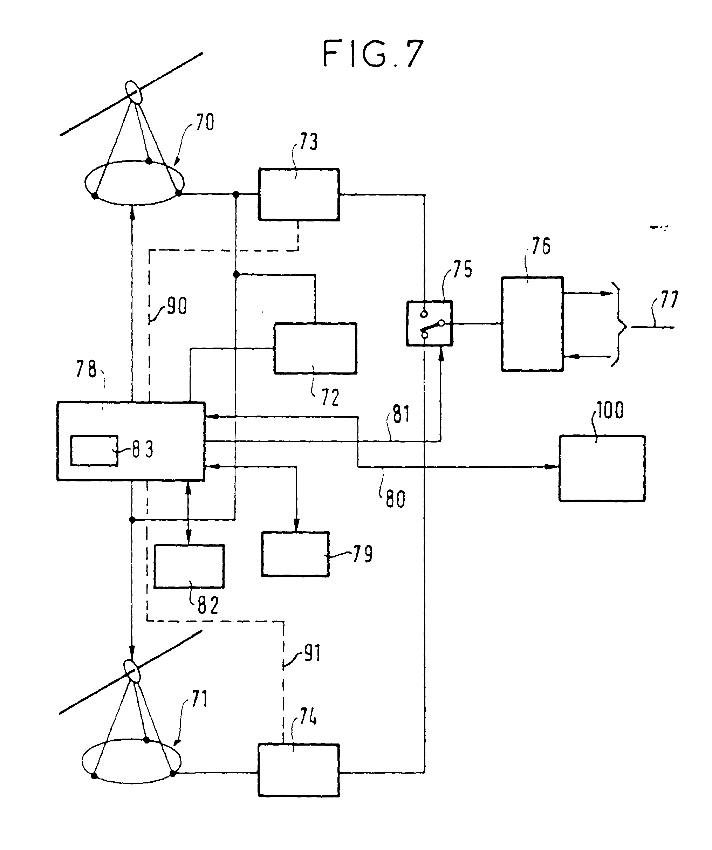

Le système de l'invention, tel que l'on vient de décrire, dans lequel les établissements et suppressions de faisceaux sont commandables se prête aisément à la mise en oeuvre de ce concept. On en donnera une description en se référant d'abord aux figures 6 et 7.

Comme on peut le voir, la figure 6, décrivant les équipements d'un satellite du système de communication de l'invention, complété par des moyens de prévention de brouillage, contient tous les éléments de la figure 4, auxquels ont été conservées les mêmes références. On ne les redécrira pas. Les seuls éléments ajoutés sont des moyens de prévention de brouillage 52, 53, contenant des données de brouillage définissant ou permettant de définir, pour chaque satellite et en ce qui concerne chaque station, au moins un intervalle de temps où l'établissement d'une liaison de communication est permis, ou, réciproquement, au moins un intervalle de temps où l'établissement d'une liaison de communication est interdit, ces moyens de prévention de brouillage comprenant des moyens de contrôle intervenant dans les décisions d'établissement et/ou de suppression de faisceaux entre le satellite et la station considérés en interdisant l'établissement ou le maintien d'une liaison de communication susceptible de perturber d'autres communications spatiales.

Plus précisément, ces moyens de préventions de brouillage comprennent une mémoire 52 contenant une table contenant lesdites données de brouillage, qui est consultée par un dispositif de contrôle 53, incorporé dans le processeur de commande 50 du satellite, lors du pointage de faisceaux, afin d'empêcher, le cas échéant, leur pointage dans une direction telle que le système soit susceptible de perturber d'autres communications spatiales.

Les données de la mémoire 52 sont téléchargées comme celles de la mémoire 51, ou peuvent être calculées à bord. Elle contient des données de brouillage ayant, par exemple le format illustré à la figure 8. On y voit que, pour chacune des stations au sol I, II..., N, la table définit, par exemple pour la station I, un intervalle de temps tel que tI0d-tI0f, spécifié par un temps de début tI0d et un temps de fin tI0f, et d'autres semblables tI1d-tI1f..., tIxd-tIxf. Il en va de même pour toutes les autres stations du système de communication, II..., N, l'identification de station I étant remplacé par II..., N et le nombre d'intervalles de temps définis étant y..., z. Ces intervalles de temps sont ceux pendant lesquels l'établissement de faisceaux en direction de la cellule contenant la station identifiée est permis. A contrario, la même table définit les intervalles de temps pendant lesquels de tels faisceaux ne doivent pas exister, quelle qu'en soit la raison, notamment parce qu'ils risqueraient de causer du brouillage à un autre système de communication par satellites, par exemple par satellites géostationnaires. Lors de l'établissement de faisceaux, la ligne de la table correspondant à la station, donc à la cellule au sol vers laquelle seront pointés ces faisceaux est consultée. L'heure courante disponible de façon classique dans le satellite à l'aide d'une horloge est comparée, par le dispositif 53, aux intervalles de temps qu'elle contient.

Si cette heure se trouve dans un intervalle de temps, l'établissement des faisceaux est permis. La commande d'établissement des faisceaux est mise en application. Par ailleurs, le processeur 50 communique à la station ayant demandé les faisceaux l'heure de fin de l'intervalle de temps autorisé. La station pourra comparer cette information avec l'heure de fin d'utilisation de ces faisceaux, qu'elle possède elle-même, afin de vérifier qu'elle pourra conserver les faisceaux considérés aussi longtemps qu'elle le prévoit et donner l'alerte, si ce n'est pas le cas.

Si l'heure courante ne se trouve pas dans un intervalle de temps défini par la table de la figure 8, la commande n'est pas appliquée et un message d'erreur est adressé par le processeur 50, par la liaison de commande comprenant les éléments 64, 65, 61, 60 en direction de la station ayant fournie cette commande, pour donner l'alerte et provoquer la mise en oeuvre de processus de secours qui sortent du cadre de l'invention. Il en ira de même si la demande de faisceau survient alors que la fin de l'intervalle autorisé est proche.

On se tournera maintenant vers la figure 7 représentant les équipements d'une station ou d'un terminal conformes à ceux de la figure 5, mais complétés par un moyen de prévention de brouillage 82, semblable pour l'essentiel à la mémoire 52 de la figure 6. En particulier, le contenu de la mémoire 82 peut avoir une structure différente de celle qui est illustrée par la figure 8. Cette mémoire 82 est utilisée par la station pour création de chaque fasceau au-dessus de sa zone. Le centre de commande, avantageusement, fournira les données des tables 82 et 52 qui seront téléchargées de la même manière que les tables contenues dans les mémoires 51 et 79, dans les satellites, dans les stations et dans les terminaux.

Par ailleurs, la station reçoit les messages d'erreur et les messages d'heure de fin d'intervalle autorisé. Le processeur est agencé pour traiter ces messages, principalement en les transmettant au centre de commande et, éventuellement pour mettre en oeuvre des procédures de remise en ordre.

En effet, c'est le centre de commande qui, en chargeant les tables telles que 51, 52, 79 et 82, commande aux stations, aux terminaux et aux satellites, du seul point de vue spatial, les opérations dirigeant les liaisons de communication, c'est-à-dire, pour les satellites, quels faisceaux ils peuvent fournir (fréquence, gain, pointage, heure de début et heure de fin), pour les stations et les terminaux, quel satellite viser (pointage, heure de début et heure de fin).

Dans le cas envisagé plus haut en relation avec la figure 2, les tables en question peuvent avoir un caractère semi-permanent ; elles ne changeront que lorsque le système de satellites sera modifié.

Par contre, l'invention s'appliquerait tout aussi bien dans le cas de satellites sur des orbites non résonnantes ; les tables devront alors être périodiquement rechargées ou recalculées et contiendront l'information nécessaire pour la période entre deux opérations de chargement de tables. Cette période peut être de l'ordre d'un mois, avec la technologie de mémoires d'aujourd'hui.

On remarquera que, pour ce qui concerne les terminaux, une telle information n'est pas nécessaire et peut être remplacée par de simples tables d'éphémérides, à nouveau à caractère semi-permanent, définissant les trajectoires des satellites en service. En effet, chaque terminal peut être arrangé pour recevoir de la station dont il dépend, pendant qu'il communique avec elle par un satellite, l'identité du satellite suivant à utiliser pour poursuivre la communication. La table d'éphémérides permettra de l'acquérir et de le poursuivre. A la mise en marche d'un terminal, une recherche systématique dans cette table permettra au terminal de tenter une mise en communication par chacun des satellites en visibilité, jusqu'à ce qu'il rencontre un satellite ayant établi les faisceaux pour la cellule dans laquelle il se trouve.

Cette commande centralisée du réseau de communication tient compte de ce qui vient d'être dit en matière de prévention de brouillage avec un réseau de communication géostationnaire existant.

La table de la figure 8, mise en oeuvre dans un satellite permet de s'assurer que le système de l'invention ne pourra pas perturber le systeme de communication géostationnaire.

De même, le contenu de la table 82 localisée dans chaque station permet de s'assurer que le système de l'invention ne pourra perturber le système de communications géostationnaires. Il peut être considérablement plus simple que celui de la figure 8. La table 82, par exemple, peut inclure la description angulaire d'une bande céleste où ne doivent pas pointer les antennes de la station.

Par ailleurs, à l'ouverture d'un faisceau, la station reçoit à cette occasion un message du satellite lui indiquant jusqu'à quand ce dernier pourra maintenir les faisceaux vers cette station. A nouveau cette information doit être comparée au contenu des bases de données 79 et 82 pour vérifier que cette limite est en-dehors de la durée prévue de poursuite de ce satellite. Au cas où cela ne se vérifierait pas, un message d'erreur doit être transmis.

Il suffit, pour s'assurer de l'absence de brouillage préjudiciable sur les systèmes géostationnaires de n'utiliser que les tables localisées dans les satellites ou de n'utiliser que les tables localisées dans les stations. L'utilisation conjointe des deux types de tables décrites précédemment ne fait qu'augmenter la sécurité du système.

Le pointage des antennes des terminaux est finalement commandé par le centre de commande, de la façon décrite pour les stations. Une vérification de l'absence d'émission dans ladite bande céleste est également souhaitable, mais n'est pas indispensable. Les terminaux n'émettent que lorsqu'ils identifient un signal en provenance d'un satellite du système de l'invention : leurs émissions ne risquent donc pas d'entraîner un brouillage des communications géostationnaires. Toutefois, l'application des dispositions qui précèdent peut conduire à un problème spécifique qui est que, bien que son antenne ne pointe pas dans la bande céleste précédente, mais alors qu'elle en est proche, la transmission montante du terminal vers le satellite du système de la présente invention peut être perturbée par une station voisine puissante d'un système de communication géostationnaire. Il est donc additionellement prévu que des moyens sont inclus dans les terminaux pour augmenter temporairement et de façon limitée leur puissance d'émission, sur demande de la station avec laquelle ils communiquent, lorsque la communication est affectée par du brouillage. Ces moyens sont illustrés, sur la figure 7 par des liaisons 90 et 91 entre le processeur 78 et les chaînes d'émission-réception 73 et 74. Sur une commande reçue de la station associée par le processeur 78, le niveau d'émission du terminal, par la chaîne alors active, est augmenté d'une quantité prédéterminée, 6 dB par exemple, afin d'améliorer le rapport signal à perturbateur au niveau du satellite. Si l'augmentation de puissance ne suffit pas, on peut prévoir que le terminal diminue son débit, afin d'améliorer la qualité de communication. Une variante consiste à attribuer au terminal une autre fréquence qui lui permette d'éviter le brouillage.Les mêmes dispositions peuvent d'ailleurs être utilisées dans d'autres cas de perturbation de la transmission vers le satellite. Bien entendu, cet accroissement du niveau d'émission n'est pas tel qu'il puisse être lui-même cause de brouillage en direction du système de communication géostationnaire.

Le système de prévention d'un brouillage préjudiciable en provenance et à destination de systèmes à satellites géostationnaires, permettant la réutilisation des fréquences de transmission de tels systèmes est enfin applicable dès qu'il s'agit de communiquer avec avec des terminaux au sol, un satellite établissant une liaison de communication avec des terminaux situés dans une zone terrestre limitée par l'intermédiaire d'un faisceau orientable d'émission et d'un faisceau orientable de réception, pointant vers ladite zone limitée incluant lesdits terminaux et supportant ladite liaison de communication. En d'autres termes, il n'est pas nécessaire qu'il y ait une station au sens où on l'a décrit précédemment, soit que les terminaux communiquent directement entre eux, soit que la station, ou ce qui en tient lieu, ne soit pas dans la cellule. Les satellites s'interdiront, par les moyens décrits précédemment (tables 52 et 82 des figures 6 et 7) d'émettre dans des conditions susceptibles d'entraîner un brouillage de communications géostationnaires. Les terminaux, quant à eux, n'émettent que lorsqu'ils identifient un signal provenant d'un satellite : leurs émission ne risquent donc pas d'entraîner un brouillage des communications géostationnaires.

## Revendications

1. Système de communication comprenant un ensemble de satellites à défilement établissant des liaisons de communication entre des stations au sol et des terminaux, une liaison issue d'une station aboutissant à des terminaux associés situés dans une zone géographique limitée incluant cette station et étant établie par un satellite appartenant audit ensemble de satellites, caractérisé en ce que ledit satellite est commandé pour établir, pour chacune d'une pluralité de liaisons de communication, un faisceau orientable d'émission et un faisceau orientable de réception, pointant vers une desdites zones géographiques et supportant une telle liaison de communication entre une station particulière et ses terminaux dans la zone, l'établissement et la suppression desdites liaisons de communication ayant lieu zone par zone.

2. Système de communication conforme à la revendication 1, caractérisé en ce que lesdits faisceaux sont établis sur commande de ladite station particulière, transmise audit satellite.

3. Système de communication conforme à la revendication 1, caractérisé en ce que lesdits faisceaux sont établis à partir de données de pointage préalablement enregistrées dans ledit satellite et utilisées au fur et à mesure de la progression du satellite.

4. Système de communication conforme à la revendication 1, caractérisé en ce que lesdits faisceaux sont établis à partir de données de pointage préalablement enregistrées dans ladite station particulière et fournies au satellite au fur et à mesure de sa progression.

5. Système de communication conforme à la revendication 1 ou 2, caractérisé en ce que, un satellite étant en vue de ladite station particulière, celle-ci est agencée pour lui commander une mise en liaison, ce qui consiste à lui transmettre des données qui l'identifient elle-même et des données de commande d'établissement de faisceaux, le satellite étant agencé pour vérifier l'appartenance de la station au système et pour établir en conséquence les faisceaux qu'elle demande.

6. Système de communication conforme à la revendication 1 ou 2, caractérisé en ce que, un satellite étant en vue de ladite station particulière, celle-ci est agencée pour lui commander une suppression de liaison, ce qui consiste à lui transmettre des données qui l'identifient elle-même et des données de commande de suppression de faisceaux, le satellite étant agencé pour vérifier l'appartenance de la station au système et pour supprimer en conséquence les faisceaux établis à son profit.

7. Système de communication conforme à la revendication 5 et 6, caractérisé en ce que ladite station particulière est agencée pour déceler l'entrée en visibilité des satellites du système et pour prévoir leur sortie de visibilité, pour décider à tout instant par quel satellite en visibilité elle doit être mise en liaison et pour transmettre aux satellites en visibilité, en conséquence, les commandes de mise liaison et de suppression de liaison, afin de demeurer en communication avec les terminaux de sa zone.

8. Système de communication conforme à l'une quelconque des revendications 1 à 6, caractérisé en ce que chaque station comprend une antenne directive au moins, qui pointe vers le satellite par lequel est établie à son profit une liaison de communication.

9. Système de communication conforme à l'une quelconque des revendications 1 à 6, caractérisé en ce que chaque station comprend deux antennes directives au moins, dont une antenne en fonctionnement qui pointe vers le satellite par lequel est établie à son profit une liaison de communication, tandis que l'autre est libre pour être pointée vers le satellite qui, ensuite, sera chargé d'établir ladite liaison de communication.

10. Système de communication conforme à la revendication 8 ou 9, caractérisé en ce que chaque terminal comprend une antenne directive au moins, laquelle est pointée vers le satellite par lequel est établie une liaison de communication qui la vise.

11. Système de communication conforme à la revendication 10, caractérisé en ce que ledit satellite est commandé pour établir lesdits faisceaux seulement hors d'une zone céleste où le système serait susceptible de perturber d'autres communications spatiales.

12. Système de communication comprenant un ensemble de satellites à défilement établissant des liaisons de communication avec des terminaux au sol, un satellite établissant une liaison de communication avec des terminaux situés dans une zone terrestre limitée, par l'intermédiaire d'un faisceau orientable d'émission et d'un faisceau orientable de réception, pointant vers ladite zone limitée incluant lesdits terminaux et supportant ladite liaison de communication, caractérisé en ce que ledit satellite est commandé pour établir lesdits faisceaux seulement hors d'une zone céleste où le système serait susceptible de perturber d'autres communications spatiales.

13. Système de communication conforme à l'une des revendications 11 et 12, caractérisé en ce que ledit satellite transmet sur une fréquence au moins allouée auxdites autres communications spatiales.

14. Système de communication conforme à l'une des revendications 11 et 12, caractérisé en ce que des moyens de prévention de brouillage y sont inclus, contenant des données de brouillage définissant ou permettant de définir, pour chaque satellite et en ce qui concerne chaque zone limitée, au moins un intervalle de temps où l'établissement d'une liaison de communication est permis, ou, réciproquement, au moins un intervalle de temps où l'établissement d'une liaison de communication est interdit, ces moyens de prévention de brouillage intervenant lors de l'établissement et/ou de la suppression de faisceaux entre le satellite et la zone considérés.

15. Système de communication conforme à l'une quelconque des revendications 11, 12, 13, 14, caractérisé en ce que des données de brouillage sont incluses dans une table, incorporée dans chaque terminal, qui est consultée lors du pointage de son antenne en fonctionnement, afin d'empêcher le pointage dans une direction telle que le système soit susceptible de perturber d'autres communications spatiales.

16. Système de communication conforme à l'une quelconque des revendications 11, 12, 13, 14, caractérisé en ce que des données de brouillage sont incluses dans une table, incorporée dans chaque station, qui est consultée lors du pointage de son antenne en fonctionnement, afin de d'empêcher le pointage dans une direction telle que le système soit susceptible de perturber d'autres communications spatiales.

17. Système de communication conforme à l'une quelconque des revendications 11, 12, 13, 14, caractérisé en ce que lesdites données de brouillage sont incluses dans une table, incorporée dans chaque satellite, qui est consultée lors de la création de faisceaux, afin d'empêcher leur pointage dans une direction telle que le système soit susceptible de perturber d'autres communications spatiales.

18. Système de communication conforme à l'une quelconque des revendications 15, 16, 17, caractérisé en ce que ladite table est téléchargée à partir d'un centre de commande ou calculée sur place.

19. Système de communication conforme à la revendication 18, caractérisé en ce que ledit centre de commande fournit également lesdites données de pointage aux stations et/ou aux satellites.

20. Système de communication conforme à la revendication 14 ou 15, caractérisé en ce que des moyens sont inclus dans les terminaux pour, temporairement, augmenter la puissance d'émission, diminuer le débit ou changer de fréquence d'émission, afin que les signaux qu'ils transmettent ne soient pas affectés par un éventuel brouillage.

21. Système de communication conforme à l'une quelconque des revendication précédentes, caractérisé en ce que des satellites sont sur une orbite telle que leur trace au sol se referme après un nombre défini de révolutions.

22. Satellite pour un système de communication comprenant un ensemble de satellites à défilement établissant des liaisons de communication entre des stations au sol et des terminaux, une liaison issue d'une station aboutissant à des terminaux associés situés dans une zone géographique limitée incluant cette station et étant établie par un satellite appartenant audit ensemble de satellites, caractérisé en ce que ledit satellite comprend des moyens pour établir, pour chacune d'une pluralité de liaisons de communication, un faisceau orientable d'émission et un faisceau orientable de réception, pointant vers une desdites zones géographiques et supportant une telle liaison de communication entre une station particulière et ses terminaux dans la zone, l'établissement et la suppression desdites liaisons de communication ayant lieu zone par zone.

23. Satellite conforme à la revendication 22, caractérisé en ce que lesdits faisceaux sont établis sur commande de ladite station particulière, transmise audit satellite.

24. Satellite conforme à la revendication 22, caractérisé en ce que lesdits faisceaux sont établis à partir de données de pointage préalablement enregistrées dans ledit satellite et utilisées au fur et à mesure de la progression du satellite.

25. Satellite conforme à la revendication 22, caractérisé en ce que lesdits faisceaux sont établis à partir de données de pointage préalablement enregistrées dans ladite station particulière et fournies au satellite au fur et à mesure de sa progression.

26. Satellite conforme à la revendication 22 ou 23, caractérisé en ce que, un satellite étant en vue de ladite station particulière, celle-ci est agencée pour lui commander une mise en liaison, ce qui consiste à lui transmettre des données qui l'identifient elle-même et des données de commande d'établissement de faisceaux, le satellite étant agencé pour vérifier l'appartenance de la station au système et pour établir en conséquence les faisceaux qu'elle demande.

27. Satellite conforme à la revendication 22 ou 23, caractérisé en ce que, un satellite étant en vue de ladite station particulière, celle-ci est agencée pour lui commander une suppression de liaison, ce qui consiste à lui transmettre des données qui l'identifient elle-même et des données de commande de suppression de faisceaux, le satellite étant agencé pour vérifier l'appartenance de la station au système et pour supprimer en conséquence les faisceaux établis à son profit.

28. Satellite conforme à l'une quelconque des revendications 22 à 27, caractérisé en ce que ledit satellite établit lesdits faisceaux seulement hors d'une zone céleste où le système serait susceptible de perturber d'autres communications spatiales.

29. Satellite pour un système de communication comprenant un ensemble de satellites à défilement établissant des liaisons de communication avec des terminaux au sol, un satellite établissant une liaison de communication avec des terminaux situés dans une zone terrestre limitée, par l'intermédiaire d'un faisceau orientable d'émission et d'un faisceau orientable de réception, pointant vers ladite zone limitée incluant lesdits terminaux et supportant ladite liaison de communication, caractérisé en ce que ledit satellite est commandé pour établir lesdits faisceaux seulement hors d'une zone céleste où le système serait susceptible de perturber d'autres communications spatiales.

30. Satellite de communication conforme à l'une des revendications 28 et 29, caractérisé en ce que ledit satellite transmet sur une fréquence au moins allouée auxdites autres communications spatiales.

31. Satellite conforme à l'une des revendications 28 et 29, caractérisé en ce que des moyens de prévention de brouillage y sont inclus, contenant des données de brouillage définissant ou permettant de définir, pour chaque satellite et en ce qui concerne chaque zone limitée, au moins un intervalle de temps où l'établissement d'une liaison de communication est permis, ou, réciproquement, au moins un intervalle de temps où l'établissement d'une liaison de communication est interdit, ces moyens de prévention de brouillage intervenant lors de l'établissement et/ou de la suppression de faisceaux entre le satellite et la zone considérés.

32. Satellite conforme à l'une quelconque des revendications 28, 29, 30, 31, caractérisé en ce que lesdites données de brouillage sont incluses dans une table, incorporée dans chaque satellite, qui est consultée lors de la création de faisceaux, afin d'empêcher leur pointage dans une direction telle que le système soit susceptible de perturber d'autres communications spatiales.

33. Station pour un système de communication comprenant un ensemble de satellites à défilement établissant des liaisons de communication entre des stations au sol et des terminaux, une liaison issue d'une station aboutissant à des terminaux associés situés dans une zone géographique limitée incluant cette station et étant établie par un satellite appartenant audit ensemble de satellites, ledit satellite comprenant des moyens pour établir, pour chacune d'une pluralité de liaisons de communication, un faisceau orientable d'émission et un faisceau orientable de réception, pointant vers une desdites zones géographiques et supportant une telle liaison de communication entre une station particulière et ses terminaux dans la zone, l'établissement et la suppression desdites liaisons de communication ayant lieu zone par zone, caractérisée en ce que lesdits faisceaux sont établis sur commande de ladite station, transmise audit satellite.

34. Station conforme à la revendication 33,
caractérisée en ce que lesdits faisceaux sont établis à partir de données de pointage préalablement enregistrées dans ladite station et fournies au satellite au fur et à mesure de sa progression.

35. Station conforme à la revendication 33 ou 34, caractérisée en ce que, un satellite étant en vue de ladite station, celle-ci est agencée pour lui commander une mise en liaison, ce qui consiste à lui transmettre des données qui l'identifient elle-même et des données de commande d'établissement de faisceaux.

36. Station conforme à la revendication 33 ou 34, caractérisée en ce que, un satellite étant en vue de ladite station, celle-ci est agencée pour lui commander une suppression de liaison, ce qui consiste à lui transmettre des données qui l'identifient elle-même et des données de commande de suppression de faisceaux.

37. Station pour un système de communication comprenant un ensemble de satellites à défilement établissant des liaisons de communication avec des terminaux au sol, un satellite établissant une liaison de communication avec des terminaux situés dans une zone terrestre limitée, par l'intermédiaire d'un faisceau orientable d'émission et d'un faisceau orientable de réception, pointant vers ladite zone limitée incluant lesdits terminaux et supportant ladite liaison de communication, caractérisée en ce que des moyens de prévention de brouillage y sont inclus, contenant des données de brouillage définissant ou permettant de définir, pour chaque station, au moins un intervalle de temps où l'établissement d'une liaison de communication est permis, ou, réciproquement, au moins un intervalle de temps où l'établissement d'une liaison de communication est interdit,

38. Station conforme à la revendication 37,
caractérisée en ce que lesdites données de brouillage sont incluses dans une table, incorporée dans chaque station, qui est consultée lors de l'orientation d'une antenne de la station, afin d'empêcher son pointage dans une direction telle que la station soit susceptible de perturber d'autres communications spatiales.

39. Terminal pour un système de communication comprenant un ensemble de satellites à défilement établissant des liaisons de communication entre des stations au sol et des terminaux, une liaison issue d'une station aboutissant à des terminaux associés situés dans une zone géographique limitée incluant ce terminal et étant établie par un satellite appartenant audit ensemble de satellites, ledit satellite comprenant des moyens pour établir, pour chacune d'une pluralité de liaisons de communication, un faisceau orientable d'émission et un faisceau orientable de réception, pointant vers une desdites zones géographiques et supportant une telle liaison de communication entre une station particulière et ses terminaux dans la zone, l'établissement et la suppression desdites liaisons de communication ayant lieu zone par zone, caractérisé en ce que des moyens de prévention de brouillage y sont inclus, contenant des données de brouillage définissant ou permettant de définir, pour chaque terminal, au moins un intervalle de temps où l'établissement d'une liaison de communication est permis, ou, réciproquement, au moins un intervalle de temps où l'établissement d'une liaison de communication est interdit.

40. Terminal conforme à la revendication 39,
caractérisée en ce que lesdites données de brouillage sont incluses dans une table, incorporée dans chaque terminal, qui est consultée lors de l'orientation d'une antenne de ce terminal, afin d'empêcher son pointage dans une direction telle que le terminal soit susceptible de perturber d'autres communications spatiales.

41. Terminal conforme à la revendication 39 ou 40, caractérisé en ce que des moyens y sont pour augmenter temporairement la puissance d'émission, diminuer le débit ou changer de fréquence d'émission, afin que les signaux qu'il transmet ne soient pas affectés par un éventuel brouillage.

## Patentansprüche

1. Kommunikationssystem, das ein Ensemble von sich bewegenden Satelliten umfaßt, die Kommunikationsverbindungen zwischen Stationen am Erdboden und Endgeräten etablieren, wobei eine von einer Station ausgehende Verbindung zu zugeordneten Endgeräten führt, die in einer begrenzten geographischen Zone angeordnet sind, die die Station enthält, und von einem Satelliten etabliert wird, der zu dem Ensemble von Satelliten gehört, **dadurch gekennzeichnet,** daß der Satellit gesteuert ist, um für jede aus einer Mehrzahl von Kommunikationsverbindungen einen orientierbaren Sendestrahl und einen orientierbaren Empfangsstrahl zu etablieren, die auf eine der geographischen Zonen ausgerichtet sind und eine solche Kommunikationsverbindung zwischen einer bestimmten Station und ihren Endgeräten in der Zone unterstützen, wobei die Etablierung und die Aufhebung der Kommunikationsverbindungen zonenweise stattfindet.

2. Kommunikationssystem nach Anspruch 1, dadurch gekennzeichnet, daß die Strahlen auf Befehl der bestimmten Station etabliert werden, der an den Satelliten übertragen wird.

3. Kommunikationssystem nach Anspruch 1, dadurch gekennzeichnet, daß die Strahlen anhand von Ausrichtedaten etabliert werden, die vorab in dem Satelliten aufgezeichnet sind und im Laufe der Bahnbewegung des Satelliten verwendet werden.

4. Kommunikationssystem nach Anspruch 1, dadurch gekennzeichnet, daß die Strahlen anhand von Ausrichtedaten etabliert werden, die vorab in der bestimmten Station aufgezeichnet sind und dem Satelliten im Laufe seiner Bahnbewegung geliefert werden.

5. Kommunikationssystem nach Anspruch 1 oder 2, dadurch gekennzeichnet, daß, wenn ein Satellit sich im Blickfeld der bestimmten Station befindet, diese eingerichtet ist, ihm einen Befehl zum In-Verbindung-Setzen zu erteilen, der darin besteht, an ihn Daten, die sie selbst identifizieren, und Steuerdaten zum Etablieren von Strahlen zu übertragen, und daß der Satellit eingerichtet ist, um die Zugehörigkeit der Station zu dem System zu überprüfen und infolgedessen die Strahlen zu etablieren, die diese verlangt.

6. Kommunikationssystem nach Anspruch 1 oder 2, dadurch gekennzeichnet, daß wenn ein Satellit sich im Blickfeld der bestimmten Station befindet, diese eingerichtet ist, ihm einen Befehl zum Verbindung-Aufheben zu erteilen, der darin besteht, an ihn Daten, die sie selbst identifizieren, und Steuerdaten zum Aufheben von Strahlen zu übertragen, und daß der Satellit eingerichtet ist, um die Zugehörigkeit der Station zu dem System zu überprüfen und infolgedessen die für sie etablierten Strahlen aufzuheben.

7. Kommunikationssystem nach Anspruch 5 oder 6, dadurch gekennzeichnet, daß die bestimmte Station eingerichtet ist, um den Eintritt der Satelliten des Systems ins Blickfeld zu erkennen und ihren Austritt aus dem Blickfeld vorherzusehen, um zu jedem Zeitpunkt zu entscheiden, durch welchen Satelliten im Blickfeld sie in Verbindung gesetzt werden soll, und an die Satelliten im Blickfeld infolgedessen die Befehle zum In-Verbindung-Setzen und zum Verbindung-Aufheben mit dem Ziel zu übertragen, mit den Endgeräten ihrer Zone in Verbindung zu bleiben.

8. Kommunikationssystem nach einem beliebigen der Ansprüche 1 bis 6, dadurch gekennzeichnet, daß jede Station wenigstens eine Richtantenne umfaßt, die auf den Satelliten ausgerichtet ist, von dem für sie eine Kommunikationsverbindung etabliert ist.

9. Kommunikationssystem nach einem beliebigen der Ansprüche 1 bis 6, dadurch gekennzeichnet, daß jede Station wenigstens zwei Richtantennen umfaßt, darunter eine Antenne in Betrieb, die auf den Satelliten ausgerichtet ist, von dem für sie eine Kommunikationsverbindung etabliert ist, wohingegen die andere frei ist, um auf den Satelliten ausgerichtet zu werden, der anschließend beauftragt sein wird, die Kommunikationsverbindung zu etablieren.

10. Kommunikationssystem nach Anspruch 8 oder 9, dadurch gekennzeichnet, daß jedes Endgerät wenigstens eine Richtantenne umfaßt, die auf den Satelliten ausgerichtet ist, von dem eine an es gerichtete Kommunikationsverbindung etabliert ist.

11. Kommunikationssystem nach Anspruch 10, dadurch gekennzeichnet, daß der Satellit gesteuert ist, um die Strahlen nur außerhalb einer Himmelszone zu etablieren, in der das System in der Lage wäre, andere Weltraumkommunikationen zu stören.

12. Kommunikationssystem, das ein Ensemble von sich bewegenden Satelliten umfaßt, die Kommunikationsverbindungen mit Endgeräten am Erdboden etablieren, wobei ein Satellit eine Kommunikationsverbindung mit Endgeräten, die sich in einer begrenzten Zone des Erdbodens befinden, über einen orientierbaren Sendestrahl und einen orientierbaren Empfangsstrahl etabliert, die auf die begrenzte Zone ausgerichtet sind, die die Endgeräte enthält, und die Kommunikationsverbindung unterstützen, dadurch gekennzeichnet, daß der Satellit gesteuert ist, um die Strahlen nur außerhalb einer Himmelszone zu etablieren, in der das System in der Lage wäre, andere Weltraumkommunikationen zu stören.

13. System nach einem der Ansprüche 11 und 12, dadurch gekennzeichnet, daß der Satellit auf wenigstens einer Frequenz überträgt, die den anderen Weltraumkommunikationen zugeteilt ist.

14. Kommunikationssystem nach einem der Ansprüche 11 und 12, dadurch gekennzeichnet, daß Mittel zur Verhütung von Störungen darin enthalten sind, die Störungsdaten enthalten, die für jeden Satelliten und im Hinblick auf jede begrenzte Zone wenigstens ein Zeitintervall definieren oder zu definieren erlauben, wo die Etablierung einer Kommunikationsverbindung erlaubt ist, oder wo umgekehrt die Etablierung einer Kommunikationsverbindung verboten ist, wobei diese Mittel zur Verhütung von Störungen bei der Etablierung und/oder der Aufhebung von Strahlen zwischen dem betreffenden Satelliten und der betreffenden Zone wirksam werden.

15. Kommunikationssystem nach einem beliebigen der Ansprüche 11, 12, 13, 14, dadurch gekennzeichnet, daß Störungsdaten in einer in jedem Endgerät eingebauten Tabelle enthalten sind, die beim Ausrichten seiner in Betrieb befindlichen Antenne abgefragt wird, um das Ausrichten in einer solchen Richtung zu verhindern, daß das System in der Lage ist, andere Weltraumkommunikationen zu stören.

16. Kommunikationssystem nach einem beliebigen der Ansprüche 11, 12, 13, 14, dadurch gekennzeichnet, daß Störungsdaten in einer in jeder Station eingebauten Tabelle enthalten sind, die beim Ausrichten ihrer in Betrieb befindlichen Antenne abgefragt wird, um das Ausrichten in einer solchen Richtung zu verhindern, daß das System in der Lage ist, andere Weltraumkommunikationen zu stören.

17. Kommunikationssystem nach einem beliebigen der Ansprüche 11, 12, 13, 14, dadurch gekennzeichnet, daß die Störungsdaten in einer in jedem Satelliten eingebauten Tabelle enthalten sind, die beim Erzeugen von Strahlen abgefragt wird, um ihr Ausrichten in einer solchen Richtung zu verhindern, daß das System in der Lage ist, andere Weltraumkommunikationen zu stören.

18. Kommunikationssystem nach einem beliebigen der Ansprüche 15, 16, 17, dadurch gekennzeichnet, daß die Tabelle von einem Steuerzentrum aus ferngeladen ist oder vor Ort berechnet ist.

19. Kommunikationssystem nach Anspruch 18, dadurch gekennzeichnet, daß das Steuerzentrum auch den Stationen und/oder den Satelliten die Ausrichtedaten liefert.

20. System nach Anspruch 14 oder 15, dadurch gekennzeichnet, daß in den Endgeräten Mittel enthalten sind, um zeitweilig die Sendeleistung zu erhöhen, die Rate zu verringern oder die Sendefrequenz zu ändern, damit die Signale, die sie übertragen, nicht von einer eventuellen Störung betroffen sind.

21. Kommunikationssystem nach einem beliebigen der vorhergehenden Ansprüche, dadurch gekennzeichnet, daß die Satelliten sich auf einer solchen Umlaufbahn befinden, daß sich ihre Spur auf dem Erdboden nach einer definierten Zahl von Umläufen schließt.

22. Satellit für ein Kommunikationssystem, das ein Ensemble von sich bewegenden Satelliten umfaßt, die Kommunikationsverbindungen zwischen Stationen am Erdboden und Endgeräten etablieren, wobei eine von einer Station ausgehende Verbindung zu zugeordneten Endgeräten führt, die in einer begrenzten geographischen Zone angeordnet sind, die die Station enthält, und von einem Satelliten etabliert wird, der zu dem Ensemble von Satelliten gehört, dadurch gekennzeichnet, daß der Satellit Mittel umfaßt, um für jede aus einer Mehrzahl von Kommunikationsverbindungen einen orientierbaren Sendestrahl und einen orientierbaren Empfangsstrahl zu etablieren, die auf eine der geographischen Zonen ausgerichtet sind und eine solche Kommunikationsverbindung zwischen einer bestimmten Station und ihren Endgeräten in der Zone unterstützen, wobei die Etablierung und die Aufhebung der Kommunikationsverbindungen zonenweise stattfindet.

23. Satellit nach Anspruch 22, dadurch gekennzeichnet, daß die Strahlen auf Befehl der bestimmten Station etabliert werden, der an den Satelliten übertragen wird.

24. Satellit nach Anspruch 22, dadurch gekennzeichnet, daß die Strahlen anhand von Ausrichtedaten etabliert werden, die vorab in dem Satelliten aufgezeichnet sind und im Laufe der Bahnbewegung des Satelliten verwendet werden.

25. Satellit nach Anspruch 22, dadurch gekennzeichnet, daß die Strahlen anhand von Ausrichtedaten etabliert werden, die vorab in der bestimmten Station aufgezeichnet sind und dem Satelliten im Laufe seiner Bahnbewegung geliefert werden.

26. Satellit nach Anspruch 22 oder 23, dadurch gekennzeichnet, daß, wenn ein Satellit sich im Blickfeld der bestimmten Station befindet, diese eingerichtet ist, ihm einen Befehl zum In-Verbindung-Setzen zu erteilen, der darin besteht, an ihn Daten, die sie selbst identifizieren, und Steuerdaten zum Etablieren von Strahlen zu übertragen, und daß der Satellit eingerichtet ist, um die Zugehörigkeit der Station zu dem System zu überprüfen und infolgedessen die Strahlen zu etablieren, die diese verlangt.

27. Satellit nach Anspruch 22 oder 23, dadurch gekennzeichnet, daß wenn ein Satellit sich im Blickfeld der bestimmten Station befindet, diese eingerichtet ist, ihm einen Befehl zum Verbindung-Aufheben zu erteilen, der darin besteht, an ihn Daten, die sie selbst identifizieren, und Steuerdaten zum Aufheben von Strahlen zu übertragen, und daß der Satellit eingerichtet ist, um die Zugehörigkeit der Station zu dem System zu überprüfen und infolgedessen die für sie etablierten Strahlen aufzuheben.

28. Satellit nach einem beliebigen der Ansprüche 22 bis27, dadurch gekennzeichnet, daß der Satellit die Strahlen nur außerhalb einer Himmelszone etabliert, in der das System in der Lage wäre, andere Weltraumkommunikationen zu stören.

29. Satellit für ein Kommunikationssystem, das ein Ensemble von sich bewegenden Satelliten umfaßt, die Kommunikationsverbindungen mit Endgeräten am Erdboden etablieren, wobei ein Satellit eine Kommunikationsverbindung mit Endgeräten, die sich in einer begrenzten Zone des Erdbodens befinden, über einen orientierbaren Sendestrahl und einen orientierbaren Empfangsstrahl etabliert, die auf die begrenzte Zone ausgerichtet sind, die die Endgeräte enthält, und die Kommunikationsverbindung unterstützen, dadurch gekennzeichnet, daß der Satellit gesteuert ist, um die Strahlen nur außerhalb einer Himmelszone zu etablieren, in der das System in der Lage wäre, andere Weltraumkommunikationen zu stören.

30. Satellit nach einem der Ansprüche 28 und 29, dadurch gekennzeichnet, daß der Satellit auf wenigstens einer Frequenz überträgt, die den anderen Weltraumkommunikationen zugeteilt ist.

31. Satellit nach einem der Ansprüche 28 und 29, dadurch gekennzeichnet, daß Mittel zur Verhütung von Störungen darin enthalten sind, die Störungsdaten enthalten, die für jeden Satelliten und im Hinblick auf jede begrenzte Zone wenigstens ein Zeitintervall definieren oder zu definieren erlauben, wo die Etablierung einer Kommunikationsverbindung erlaubt ist, oder wo umgekehrt die Etablierung einer Kommunikationsverbindung erboten ist, wobei diese Mittel zur Verhütung von Störungen bei der Etablierung und/oder der Aufhebung von Strahlen zwischen dem betreffenden Satelliten und der betreffenden Zone wirksam werden.

32. Satellit nach einem beliebigen der Ansprüche 28, 29, 30, 31, dadurch gekennzeichnet, daß die Störungsdaten in einer in jedem Satelliten eingebauten Tabelle enthalten sind, die beim Erzeugen von Strahlen abgefragt wird, um ihr Ausrichten in einer solchen Richtung zu verhindern, daß das System in der Lage ist, andere Weltraumkommunikationen zu stören.

33. Station für ein Kommunikationssystem, das ein Ensemble von sich bewegenden Satelliten umfaßt, die Kommunikationsverbindungen zwischen Stationen am Erdboden und Endgeräten etablieren, wobei eine von einer Station ausgehende Verbindung zu zugeordneten Endgeräten führt, die in einer begrenzten geographischen Zone angeordnet sind, die diese Station enthält, und von einem Satelliten etabliert wird, der zu dem Ensemble von Satelliten gehört, wobei der Satellit Mittel umfaßt, um für jede aus einer Mehrzahl von Kommunikationsverbindungen einen orientierbaren Sendestrahl und einen orientierbaren Empfangsstrahl zu etablieren, die auf eine der geographischen Zonen ausgerichtet sind und eine solche Kommunikationsverbindung zwischen einer bestimmten Station und ihren Endgeräten in der Zone unterstützen, wobei die Etablierung und die Aufhebung der Kommunikationsverbindungen zonenweise stattfindet, dadurch gekennzeichnet, daß die Strahlen auf an den Satelliten übertragenen Befehl der Station etabliert sind.

34. Station nach Anspruch 33, dadurch gekennzeichnet, daß die Strahlen anhand von Ausrichtedaten etabliert werden, die vorab in der Station aufgezeichnet sind und dem Satelliten im Laufe seiner Bahnbewegung geliefert werden.

35. Station nach Anspruch 33 oder 34, dadurch gekennzeichnet, daß, wenn ein Satellit sich im Blickfeld der Station befindet, diese eingerichtet ist, ihm einen Befehl zum In-Verbindung-Setzen zu erteilen, der darin besteht, an ihn Daten, die sie selbst identifizieren, und Steuerdaten zum Etablieren von Strahlen zu übertragen.

36. Station nach Anspruch 33 oder 34, dadurch gekennzeichnet, daß wenn ein Satellit sich im Blickfeld der Station befindet, diese eingerichtet ist, ihm einen Befehl zum Verbindung-Aufheben zu erteilen, der darin besteht, an ihn Daten, die sie selbst identifizieren, und Steuerdaten zum Aufheben von Strahlen zu übertragen.

37. Station für ein Kommunikationssystem, das ein Ensemble von sich bewegenden Satelliten umfaßt, die Kommunikationsverbindungen mit Endgeräten am Erdboden etablieren, wobei ein Satellit eine Kommunikationsverbindung mit Endgeräten, die sich in einer begrenzten Zone des Erdbodens befinden, über einen orientierbaren Sendestrahl und einen orientierbaren Empfangsstrahl etabliert, die auf die begrenzte Zone ausgerichtet sind, die die Endgeräte enthält, und die Kommunikationsverbindung unterstützen, dadurch gekennzeichnet, daß Mittel zur Verhütung von Störungen darin enthalten sind, die Störungsdaten enthalten, die für jede Station wenigstens ein Zeitintervall definieren oder zu definieren erlauben, wo die Etablierung einer Kommunikationsverbindung erlaubt ist, oder wo umgekehrt die Etablierung einer Kommunikationsverbindung verboten ist.

38. Station nach Anspruch 37, dadurch gekennzeichnet, daß die Störungsdaten in einer in jeder Station eingebauten Tabelle enthalten sind, die beim Orientieren einer Antenne der Station abgefragt wird, um ihr Ausrichten in einer solchen Richtung zu verhindern, daß das System in der Lage ist, andere Weltraumkommunikationen zu stören.

39. Endgerät für ein Kommunikationssystem, das ein Ensemble von sich bewegenden Satelliten umfaßt, die Kommunikationsverbindungen zwischen Stationen am Erdboden und Endgeräten etablieren, wobei eine von einer Station ausgehende Verbindung zu zugeordneten Endgeräten führt, die in einer begrenzten geographischen Zone angeordnet sind, die dieses Endgerät enthält, und von einem Satelliten etabliert wird, der zu dem Ensemble von Satelliten gehört, wobei der Satellit Mittel umfaßt, um für jede aus einer Mehrzahl von Kommunikationsverbindungen einen orientierbaren Sendestrahl und einen orientierbaren Empfangsstrahl zu etablieren, die auf eine der geographischen Zonen ausgerichtet sind und eine solche Kommunikationsverbindung zwischen einer bestimmten Station und ihren Endgeräten in der Zone unterstützen, wobei die Etablierung und die Aufhebung der Kommunikationsverbindungen zonenweise stattfindet, dadurch gekennzeichnet, daß Mittel zur Verhütung von Störungen darin enthalten sind, die Störungsdaten enthalten, die für jedes Endgerät wenigstens ein Zeitintervall definieren oder zu definieren erlauben, wo die Etablierung einer Kommunikationsverbindung erlaubt ist, oder wo umgekehrt die Etablierung einer Kommunikationsverbindung verboten ist.

40. Endgerät nach Anspruch 39, dadurch gekennzeichnet, daß die Störungsdaten in einer in jedem Endgerät eingebauten Tabelle enthalten sind, die beim Orientieren einer Antenne dieses Endgeräts abgefragt wird, um ihr Ausrichten in einer solchen Richtung zu verhindern, daß das Endgerät in der Lage ist, andere Weltraumkommunikationen zu stören.

41. Endgerät nach Anspruch 39 oder 40, dadurch gekennzeichnet, daß darin Mittel enthalten sind, um zeitweilig die Sendeleistung zu erhöhen, die Rate zu verringern oder die Sendefrequenz zu ändern, damit die Signale, die es überträgt, nicht von einer eventuellen Störung betroffen sind.

## Claims

1. A communication system comprising a set of satellites in low Earth orbit setting up communication links between stations and terminals on the ground, a link from a station terminating at associated terminals situated in a geographically limited spot including that station and set up by a satellite belonging to said set of satellites, characterized in that said satellite is commanded to set up, for each of a plurality of communication links, a steerable transmit beam and a steerable receive beam pointing at one of said spots and supporting a communication link of the above kind between a particular station and its terminals in the spot, said communication links being set up and cleared down spot by spot.

2. A communication system according to claim 1, characterized in that said beams are set up in response to a command transmitted from said particular station to said satellite.

3. A communication system according to claim 1, characterized in that said beams are set up in accordance with pointing data stored in said satellite and used as the satellite moves around its orbit.

4. A communication system according to claim 1, characterized in that said beams are set up on the basis of pointing data stored in a particular station and supplied to the satellite as it moves around its orbit.

5. A communication system according to claim 1 or claim 2, characterized in that, a satellite being visible from said particular station, said station is adapted to command it to set up a link, which entails transmitting to it data that identify the station and control data for setting up beams, the satellite being adapted to verify that the station belongs to the system and accordingly to set up the beams that it requests.

6. A communication system according to claim 1 or claim 2, characterized in that, a satellite being visible from said particular station, said station is adapted to command it to clear down a link, which entails it transmitting data that identifies the station and control data for clearing down beams, the satellite being adapted to verify that the station belongs to the system and accordingly to clear down the beams set up for it to use.

7. A communication system according to claims 5 and 6, characterized in that said particular station is adapted to detect when satellites of the system become visible and to predict when they will cease to be visible in order to decide at any time through which visible satellite it must communicate and accordingly to transmit to the visible satellites commands to set up and clear down links in order to remain in communication with the terminals in its spot.

8. A communication system according to any one of claims 1 to 6, characterized in that each station comprises at least one directional antenna which points towards the satellite via which a communication link is set up for it to use.

9. A communication system according to any one of claims 1 to 6, characterized in that each station comprises at least two directional antennas, an active antenna pointing at the satellite via which a communication link is set up for it to use while the other antenna is free to be pointed towards the satellite that will next be responsible for setting up said communication link.

10. A communication system according to claim 8 or claim 9, characterized in that each terminal comprises at least one directional antenna pointing at the satellite via which a communication link aimed at it is set up.

11. A communication system according to claim 10, characterized in that said satellite is commanded to set up said beams only outside an area of the sky in which the system would be liable to interfere with other space communications.

12. A communication system comprising a set of satellites in low Earth orbit setting up communication links with terminals on the ground, a satellite setting up a communication link with terminals situated in a spot via a steerable transmit beam and a steerable receive beam pointing at said spot including said terminals and supporting said communication link, characterized in that said satellite is commanded to set up said links only outside an area of the sky in which the system would be liable to interfere with other space communications.

13. A communication system according to claim 11 or claim 12, characterized in that said satellite transmits on at least one frequency allocated to said other space communications.

14. A communication system according to claim 11 or claim 12, characterized in that it includes interference prevention means containing interference data defining or used to define, for each satellite and with regard to each spot, at least one time interval in which setting up a communication link is permitted or, reciprocally, at least one time interval in which setting up a communication link is prohibited, the interference prevention means being operative when setting up and/or clearing down beams between the satellite and the spot concerned.

15. A communication system according to any one of claims 11 to 14, characterized in that interference data is included in a table in each terminal and which is consulted when pointing its antenna in service in order to prevent pointing in a direction such that the system would be liable to interfere with other space communications.

16. A communication system according to any one of claims 11 to 14, characterized in that interference data is included in a table in each station which is consulted when pointing its antenna in order to prevent pointing in a direction such that the system would be liable to interfere with other space communications.

17. A communication system according to any one of claims 11 to 14, characterized in that said interference data is included in a table in each satellite which is consulted when creating beams to prevent them pointing in a direction such that the system would be liable to interfere with other space communications.

18. A communication system according to any one of claims 15 to 17, characterized in that said table is downloaded from a control center or calculated in situ.

19. A communication system according to claim 18, characterized in that said control center also supplies said pointing data to the stations and/or satellites.

20. A communication system according to claim 14 or claim 15, characterized in that the terminals include means for temporarily increasing the transmitter power, reducing the bit rate or changing the transmit frequency so that the signals they transmit are not affected by interference.

21. A communication system according to any one of the preceding claims, characterized in that the satellites are in an orbit such that their track on the ground closes after a particular number of circuits.

22. A satellite for use in a communication system comprising a set of satellites in low Earth orbit setting up communication links between stations on the ground and terminals, a link from a station terminating at associated terminals situated in a geographically limited spot including that station and being set up by a satellite belonging to said set of satellites, characterized in that said satellite comprises means for setting up, for each of a plurality of communication links, a steerable transmit beam and a steerable receive beam pointing at one of said spots and supporting a communication link of the above kind between a particular station and its terminals in the spot, said communication links being set up and cleared down spot by spot.

23. A satellite according to claim 22, characterized in that said beams are set up in response to a command transmitted from said particular station to said satellite.

24. A satellite according to claim 22, characterized in that said beams are set up on the basis of pointing data stored in said satellite and used as it moves around its orbit.

25. A satellite according to claim 22, characterized in that said beams are set up on the basis of pointing data stored in said particular station and supplied to the satellite as it moves around its orbit.

26. A satellite according to claim 22 or claim 23, characterized in that, a satellite being visible from said particular station, said station is adapted to command it to set up a link which entails transmitting it data which identifies the station and control data for setting up beams, the satellite being adapted to verify that the station belongs to the system and accordingly to set up the beams that it requests.

27. A satellite according to claim 22 or 23, characterized in that, a satellite being visible from said particular station, said station is adapted to command it to clear down a link, which entails transmitting to it data that identifies the station and control data for clearing down beams, the satellite being adapted to verify that the station belongs to the system and accordingly to clear down the beams set up for it to use.

28. A satellite according to any one of claims 22 to 27, characterized in that said satellite sets up said beams only outside an area of the sky in which the system would be liable to interfere with other space communications.

29. A satellite for use in a communication system comprising a set of satellites in low Earth orbit setting up communication links with terminals on the ground, a satellite setting up a communication link with terminals situated in a spot via a steerable transmit beam and a steerable receive beam pointing at said spot including said terminals and supporting said communication link, characterized in that said satellite is commanded to establish said beams only outside an area of the sky in which the system would be liable to interfere with other space communications.

30. A communication satellite according to claim 28 or claim 29, characterized in that said satellite transmits on at least one frequency allocated to said other space communications.

31. A satellite according to claim 28 or claim 29, characterized in that it includes interference prevention means containing interference data defining or used to define, for each satellite and with reference to each spot, at least one time interval in which setting up a communication link is permitted or, reciprocally, at least one time interval in which setting up a communication link is prohibited, the interference prevention means being operative during setting up and/or clearing down of beams between the satellite and the spot concerned.

32. A satellite according to any one of claims 28 to 31, characterized in that said interference data is included in a table incorporated in each satellite which is consulted when creating beams in order to prevent them pointing in a direction such that the system would be liable to interfere with other space communications.

33. A station for use in a communication system comprising a set of satellites in low Earth orbit setting up communication links between stations on the ground and terminals, a link from a station terminating at associated terminals situated in a geographically limited spot including that station and being set up by a satellite belonging to said set of satellites, said satellite comprising means for setting up, for each of a plurality of communication links, a steerable transmit beam and a steerable receive beam pointing at one of said spots and supporting a communication link of the above kind between a particular station and its terminals in the spot, said communication links being set up and cleared down spot by spot, characterized in that said beams are set up in response to a command transmitted from said station to said satellite.

34. A station according to claim 33, characterized in that said beams are set up on the basis of pointing data stored in said station and supplied to the satellite as it moves around its orbit.

35. A station according to claim 33 or claim 34, characterized in that, a satellite being visible from said station, said station is adapted to command it to set up a link which entails transmitting to it data that identifies the station and control data for setting up beams.

36. A station according to claim 33 or 34, characterized in that, a satellite being visible from said station, said station is adapted to command it to clear down links, which entails transmitting to it data that identifies the station and control data for clearing down beams.

37. A station for use in a communication system comprising a set of satellites in low Earth orbit setting up communication links with terminals on the ground, a satellite setting up a communication link with terminals situated in a spot via a steerable transmit beam and a steerable receive beam pointing at said spot including said terminals and supporting said communication link, characterized in that it includes interference prevention means containing interference data defining or used to define, for each station, at least one time interval in which setting up a communication link is permitted or, reciprocally, at least one time interval in which setting up a communication link is prohibited.

38. A station according to claim 37, characterized in that said interference data is included in a table in each station which is consulted when orienting an antenna of the station in order to prevent it from being pointed in a direction such that the station would be liable to interfere with other space communications.

39. A terminal for use in a communication system comprising a set of satellites in low Earth orbit setting up communication links between stations on the ground and terminals, a link from a station terminating at associated terminals situated in a geographically limited spot including the terminal and being set up by a satellite belonging to said set of satellites, said satellite comprising means for establishing, for each of a plurality of communication links, a steerable transmit beam and a steerable receive beam pointing at one of said spots and supporting a communication link of the above kind between a particular station and its terminals in the spot, said communication links being set up and cleared down spot by spot, characterized in that it includes interference prevention means containing interference data defining or used to define, for each terminal, at least one time interval in which setting up a communication link is permitted, or reciprocally, at least one time interval in which setting up a communication link is prohibited.

40. A terminal according to claim 39, characterized in that said interference data is included in a table in each terminal which is consulted when pointing an antenna of the terminal in order to prevent it pointing in a direction such that the terminal would be liable to interfere with other space communications.

41. A terminal according to claim 39 or claim 40, characterized in that it includes means for temporarily increasing the transmitter power, reducing the bit rate or changing the transmit frequency so that the signals it transmits are not affected by any interference.
